(19) Europäisches Patentamt
European Patent Office
Office européen des brevets

(11) **EP 4 459 736 A1**

(12) **EUROPEAN PATENT APPLICATION**
published in accordance with Art. 153(4) EPC

(43) Date of publication:
**06.11.2024 Bulletin 2024/45**

(21) Application number: **23880159.1**

(22) Date of filing: **17.10.2023**

(51) International Patent Classification (IPC):
*H01M 10/0587* (2010.01)   *H01M 50/531* (2021.01)
*H01M 50/533* (2021.01)   *H01M 10/04* (2006.01)

(52) Cooperative Patent Classification (CPC):
**H01M 10/04; H01M 10/0587; H01M 50/531;
H01M 50/533**

(86) International application number:
**PCT/KR2023/015993**

(87) International publication number:
**WO 2024/085582 (25.04.2024 Gazette 2024/17)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **17.10.2022  KR 20220133219
16.10.2023  KR 20230137388**

(71) Applicant: **LG Energy Solution, Ltd.
Seoul 07335 (KR)**

(72) Inventor: **YOON, Ujin
Daejeon 34122 (KR)**

(74) Representative: **Goddar, Heinz J.
Boehmert & Boehmert
Anwaltspartnerschaft mbB
Pettenkoferstrasse 22
80336 München (DE)**

(54) **ELECTRODE ASSEMBLY, SECONDARY BATTERY, BATTERY PACK, AND VEHICLE**

(57)     An exemplary embodiment of the present invention provides an electrode assembly having a structure in which a positive electrode, a separator, and a negative electrode are stacked and wound, wherein the negative electrode includes an in-tab provided at an end portion, located in a core portion, of both end portions in a direction perpendicular to a winding axis of the electrode assembly, and wherein the in-tab is provided to wrap 50% or more of a surface of the negative electrode facing the core portion, and a secondary battery, a battery pack, and a vehicle including the electrode assembly.

[Figure 4]

EP 4 459 736 A1

## Description

[Technical Field]

This application claims priority to and the benefit of Korean Patent Application No. 10-2022-0133219 filed in the Korean Intellectual Property Office on October 17, 2022, the entire contents of which are incorporated herein by reference.

This application claims priority to and the benefit of Korean Patent Application No. 10-2023-0137388 filed in the Korean Intellectual Property Office on October 16, 2023, the entire contents of which are incorporated herein by reference.

The present invention relates to an electrode assembly, a secondary battery, a battery pack, and a vehicle.

[Background Art]

Due to characteristics of being easily applicable to various products and electrical characteristics such as high energy density, a secondary battery is not only commonly applied to a portable device, but universally applied to an electric vehicle (EV) or a hybrid electric vehicle (HEV) that is driven by an electrical driving source.

The secondary battery is attracting attention as a new energy source to improve eco-friendliness and energy efficiency because of the primary advantage that the use of fossil fuels is dramatically reduced as well as the secondary advantage that no by-products are generated from the use of energy.

Currently, widely used secondary batteries include lithium-ion batteries, lithium polymer batteries, nickelcadmium batteries, nickel-hydrogen batteries, nickel-zinc batteries, and the like. The operating voltage of a unit secondary battery cell is about 2.5 V to 4.5 V. Therefore, when a higher output voltage is required, a battery pack may be configured by connecting a plurality of secondary batteries in series. In addition, a battery pack may be configured by connecting a plurality of secondary batteries in parallel according to the charge/discharge capacity required for the battery pack. Accordingly, the number of secondary batteries included in the battery pack and the form of electrical connection may be variously set according to the required output voltage and/or charge/discharge capacity. Note that as types of secondary batteries, cylindrical, prismatic, and pouch-shaped secondary batteries are known, and the secondary batteries may be cylindrical secondary batteries.

[Detailed Description of the Invention]

[Technical Problem]

The present invention has been made in an effort to provide an electrode assembly and a secondary battery that prevent deformation of a core portion of a negative electrode of an electrode assembly and prevent a short circuit due to damage to a separator.

Another object of the present invention is to provide a battery pack including a secondary battery having an improved structure as described above, and a vehicle including the battery pack.

However, the technical problem to be solved by the present invention is not limited to the above-described problem, and other problems not described will be apparently understood by one skilled in the art from the following description.

[Technical Solution]

An exemplary embodiment of the present invention provides an electrode assembly having a structure in which a positive electrode, a separator, and a negative electrode are stacked and wound, wherein the negative electrode includes an in-tab provided at an end portion, located in a core portion, of both end portions in a direction perpendicular to a winding axis of the electrode assembly, and wherein the in-tab is provided to wrap 50% or more of a surface of the negative electrode facing the core portion.

Another exemplary embodiment of the present invention provides a secondary battery including the electrode assembly according to the exemplary embodiment of the present invention.

Still another exemplary embodiment of the present invention provides a battery pack including the secondary battery according to the exemplary embodiment described above.

Yet another exemplary embodiment of the present invention provides a vehicle including the battery pack according to the exemplary embodiment described above.

[Advantageous Effects]

In the secondary battery, the separator that is an insulator is interposed between the positive electrode and the negative electrode, which is then wound to form a jelly-roll type electrode assembly, and the electrode assembly is inserted into a battery can together with an electrolyte, whereby a battery is configured. When a jelly-roll type electrode assembly has a structure in which the electrode assembly is wound using a core portion, expansion and contraction of the negative electrode occurs during charging and discharging, thereby generating stress in the electrode assembly.

The core portion of the electrode assembly is an empty space, the stress generated during charging and discharging is suppressed from expanding outward by the battery can, and this suppressed expansion force causes deformation in the core portion. If the deformation of the core portion becomes severe, stress such as bending a portion of the electrode may occur, and as a result, a short circuit due to damage to the separator may occur inside the electrode assembly.

According to exemplary embodiments of the present invention, the in-tab provided at the end portion, located in the core portion, of the negative electrode of the electrode assembly is provided to wrap 50% or more of the surface of the negative electrode facing the core portion, whereby it is possible to prevent expansion stress inside the electrode assembly from acting on the core portion. Accordingly, it is advantageous to ensure battery stability by preventing deformation of the core portion of the electrode assembly and preventing a short circuit due to damage to the separator.

However, advantageous effects to be obtained by the present invention are not limited to the effects described above, and other effects not described herein can be clearly understood by one skilled in the art from the following description of the present invention.

[Brief Description of Drawings]

The accompanying drawings illustrate preferred exemplary embodiments of the present invention, and together with the following description of the present invention, serve to provide further understanding of the technical spirit of the present invention, and therefore, the present invention should not be construed as being limited to the drawings.

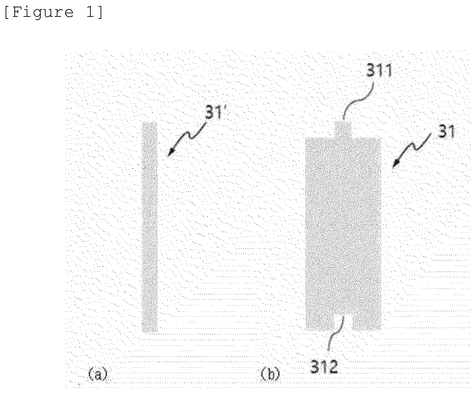

Part (a) of FIG. 1 is a view schematically showing an existing in-tab according to a Comparative Example of the present invention, and part (b) of FIG. 1 is a view schematically showing an in-tab according to an exemplary embodiment of the present invention.

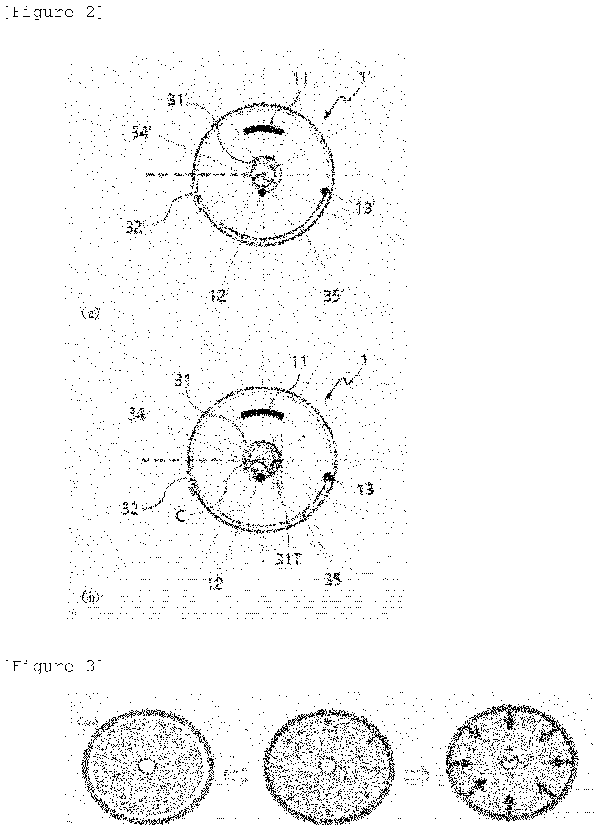

Part (a) of FIG. 2 is a view schematically showing a cross section perpendicular to a winding axis of an electrode assembly according to the Comparative Example of the present invention, and part (b) of FIG. 2 is a view schematically showing a cross section perpendicular to a winding axis of an electrode assembly according to an exemplary embodiment of the present invention.

FIG. 3 is a view showing a process that in a secondary battery including the electrode assembly according to the Comparative Example of the present invention, stress is generated in the electrode assembly due to charging and discharging and suppressed from expanding outward by a battery can, causing deformation in the core portion.

FIG. 4 is a view showing an electrode before an electrode assembly according to an exemplary embodiment of the present invention is wound.

FIG. 5 is a view showing an electrode assembly according to an exemplary embodiment of the present invention.

FIG. 6 is a view schematically showing a negative electrode and a positive electrode of an electrode assembly according to an exemplary embodiment of the present invention.

FIG. 7 is a view showing a schematic configuration of a battery pack including secondary batteries according to an exemplary embodiment of the present invention.

FIG. 8 is a view showing a schematic configuration of a vehicle including a battery pack according to an exemplary embodiment of the present invention.

FIGS. 9 and 10 are views showing problems that occur when the in-tab is provided to wrap less than 50% of a surface facing a core portion.

<Explanation of Reference Numerals and Symbols>

1: electrode assembly
1': existing electrode assembly
2: secondary battery
3: battery pack
4: pack housing
5: vehicle
10: positive electrode
11: positive electrode middle-tab
11': existing positive electrode middle-tab
12: end portion of positive electrode located in core portion
12': end portion of existing positive electrode located in core portion
13: end portion of positive electrode located on outer side
13': end portion of existing positive electrode located on outer side
14: positive electrode active material layer
15: positive electrode uncoated portion
20: separator
30: negative electrode
31: negative electrode in-tab
31': existing negative electrode in-tab
32: negative electrode outer tab
32': existing negative electrode outer tab
33: negative electrode tab
34: end portion of negative electrode located in core portion
34': end portion of existing negative electrode located in core portion
35: end portion of negative electrode located on outer side
35': end portion of existing negative electrode located on outer side
36: negative electrode active material layer
37: negative electrode uncoated portion
38: both end portions in direction perpendicular to winding axis of electrode assembly
40: surface facing core portion
41R: circumferential portion of core portion
51R: circumference portion of electrode assembly
31W: width of in-tab
31T: thickness of in-tab

311: protrusion
312: recessed portion
I: core portion
O: outermost portion
C: winding axis of electrode assembly
P: direction perpendicular to winding axis of electrode assembly

[Best Mode]

The terms or words used throughout the specification and the claims should not be construed as being limited to their ordinary or dictionary meanings, but construed as having meanings and concepts consistent with the technical idea of the present invention, based on the principle that an inventor may properly define the concepts of the words or terms to best explain the invention.

The terms used in the present specification are merely used to describe various exemplary embodiments of the present invention but are not intended to limit the present invention. The singular forms "a", "an" and "the" are intended to include plural forms as well, unless the context clearly indicates otherwise.

In the present specification, it should be understood that terms such as "include", "comprise", "provide" or "have" are used to describe the presence of a specific component, and do not exclude the presence or possibility of addition of other components.

In addition, terms such as "part" and "device" described in the specification should be understood as a unit that performs at least one function or operation.

In the present specification, the expression "existing on" a specific component is intended to express "existing on one side" of a specific component, and is not intended to limit an upper-lower relationship, and is not also limited to being in physical contact with the component but means that another member may be additionally provided between the components.

In the present specification, the term "core portion" is provided at the innermost part of the electrode assembly and refers to an empty space provided by winding a jelly-roll type electrode assembly using a mandrel.

In the present specification, "in-tab" refers to a tab provided at an end portion, located in the core portion, of both end portions in a direction perpendicular to the winding axis of the electrode assembly.

The configurations described in the following description with reference to the accompanying drawings do not represent all technical concepts or ideas of the present invention but should be considered to be exemplary embodiments of the present disclosure. Therefore, it should be understood that various modifications and equivalents of the exemplary embodiments may be devised within the scope of the present invention at the time of the filing of the application.

In order to help understanding of the invention, in the accompanying drawings, some components may not be drawn to scale, but their dimensions may be exaggerated. In addition, the same reference numbers may be assigned to the same components in different exemplary embodiments.

Hereinafter, an exemplary embodiment of the present invention will be described with reference to the drawings.

An exemplary embodiment of the present invention provides an electrode assembly having a structure in which a positive electrode, a separator, and a negative electrode are stacked and wound, wherein the negative electrode includes an in-tab provided at an end portion, located in a core portion, of both end portions in a direction perpendicular to a winding axis of the electrode assembly, and wherein the in-tab is provided to wrap 50% or more of a surface of the negative electrode facing the core portion.

The core portion is provided at the innermost part of the electrode assembly and refers to an empty space provided by winding a jelly-roll type electrode assembly using a mandrel. The empty space may be provided in a cylindrical shape.

The surface facing the core portion refers to a surface in direct contact with the core portion.

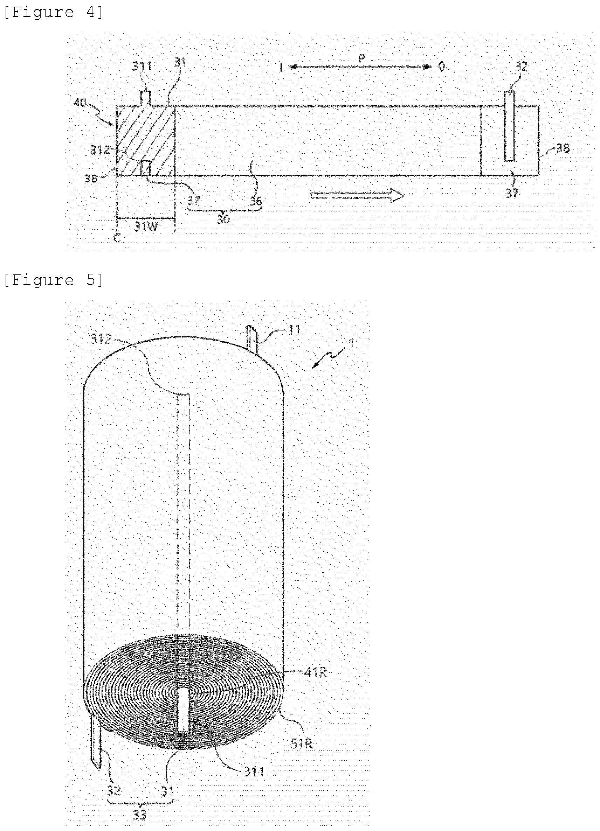

FIG. 4 is a view showing an electrode before winding an electrode assembly according to an exemplary embodiment of the present invention, and FIG. 5 is a view showing an electrode assembly according to an exemplary embodiment of the present invention.

Referring to FIGS. 4 and 5, an in-tab 31 may be a tab provided at an end portion, located in a core portion, of both end portions in a direction perpendicular to a winding axis of an electrode assembly 1.

According to an exemplary embodiment, the in-tab 31 is one continuous tab and may be provided to wrap 50% or more of a surface 40 of the negative electrode facing the core portion.

The surface 40 of the negative electrode facing the core portion refers to a hatched portion in FIG. 4, and for example, refers to a surface facing the core portion so as to wrap a circumferential portion 41R of the core portion of the electrode assembly 1.

The surface 40 of the negative electrode facing the core portion may be provided in an uncoated portion 37 of the negative electrode where an electrode active material layer is not provided.

100% of the surface 40 of the negative electrode facing the core portion may wrap 100% of the circumferential portion 41R of the core portion of the electrode assembly 1.

The end portion, located in the core portion, of both end portions in a direction perpendicular to the winding axis of the electrode assembly may be provided in the core portion that is the innermost side of the electrode assembly.

The in-tab 31 is provided to wrap 50% or more of the surface 40 of the negative electrode 30 facing the core portion, leading to an increase in internal rigidity of the core portion to make it possible to prevent expansion stress inside the electrode assembly 1 from acting on the core portion. Accordingly, it is advantageous to ensure battery stability by preventing deformation of the core portion of the electrode assembly 1 and preventing a short circuit due to damage to the separator.

Part (a) of FIG. 1 is a view schematically showing an existing in-tab 31' according to a Comparative Example of the present invention, and part (b) of FIG. 1 is a view schematically showing an in-tab 31 of a negative electrode according to an exemplary embodiment of the present invention.

Referring to part (a) of FIG. 1 and part (b) of FIG. 1, a width of the existing in-tab 31' according to the Comparative Example of the present invention is relatively narrower compared to the in-tab 31 according to the exemplary embodiment of the present invention, so the existing in-tab cannot be provided to wrap 50% or more of the surface of the negative electrode facing the core portion, and cannot thus prevent expansion stress inside the electrode assembly from acting on the core portion.

The existing in-tab 31' has a relatively narrower width compared to the in-tab 31 according to the exemplary embodiment of the present invention, so not only even if it is provided in the direction of the winding axis C of the electrode assembly, but also even if it is provided diagonally and wound to form a spiral shape, the in-tab cannot be provided to wrap 50% or more of the surface of the negative electrode facing the core portion, and a discontinuous section occurs in the spiral shape, resulting in a reduction in internal rigidity compared to the continuous in-tab 31 according to the present invention, so that the expansion stress inside the electrode assembly cannot be prevented from acting on the core portion. In addition, due to the spiral shape, burrs may be present in the discontinuous section of the in-tab, and in this case, the separator may be damaged, making safety vulnerable.

That is, when the electrode assembly has a structure in which the electrode assembly is wound by using a core portion, expansion and contraction of the negative electrode occurs during charging and discharging, thereby generating stress within the electrode assembly. The stress generated by charging and discharging is suppressed from expanding outward by a battery can, and this suppressed expansion force causes deformation in the core portion that is an empty space. If the deformation of the core portion becomes severe, stress such as bending a portion of the electrode may occur, and as a result, a short circuit due to damage to the separator may occur inside the electrode assembly.

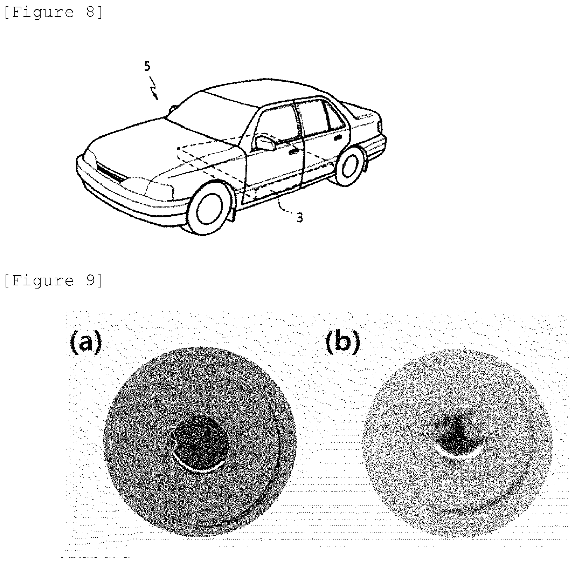

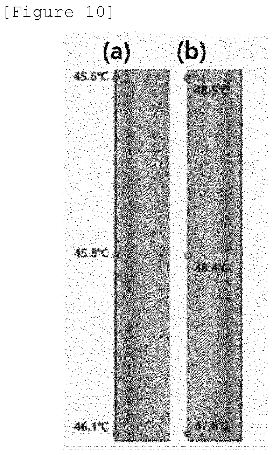

FIGS. 9 and 10 are views showing problems that occur when the in-tab 31 is provided to wrap less than 50% of the surface facing the core portion. Specifically, FIG. 9 shows the core portion deformed after activation and life evaluation, in which part (a) of FIG. 9 shows an aspect in which deformation has started after activation, and part (b) of FIG. 9 shows an aspect in which the deformation has intensified after life evaluation. In addition, in the case of a cylindrical battery in which the in-tab 31 is provided to wrap less than 50% of the surface facing the core portion, a heat dissipation problem also occurs along with deformation of the core portion. Specifically, seeing FIG. 10, it can be seen that after discharging the battery, the temperature of the core portion (b) compared to the outer surface portion (a) has risen about 2 to 3°C. That is, it was confirmed that when the in-tab 31 wraps less than 50% of the surface facing the core portion, heat is not released from the core portion and the temperature increases in the core portion.

On the other hand, the in-tab 31 according to an exemplary embodiment of the present invention may be provided to wrap 50% or more of the surface of the negative electrode facing the core portion, and for example, may be provided continuously to wrap a circumferential portion of the core portion of the electrode assembly.

By providing the in-tab 31 to wrap 50% or more of the surface facing the core portion, the rigidity of the core portion can be increased to minimize deformation of the core portion, and the heat trapped in the core portion can be transferred through the in-tab 31 that is a metal body to lower the temperature of the core portion.

The circumferential portion of the core portion of the electrode assembly refers to a circumference of the core portion that is an empty space provided by winding a jelly-roll type electrode assembly.

The in-tab 31 is provided to wrap 50% or more of the surface of the negative electrode facing the core portion, whereby it is possible to prevent the expansion stress inside the electrode assembly from acting on the core portion. Accordingly, it is advantageous to ensure battery stability by preventing deformation of the core portion of the electrode assembly and preventing a short circuit due to damage to the separator.

The fact that the in-tab 31 is provided to wrap 50% or more of the surface of the negative electrode facing the core portion means that the in-tab is provided continuously to wrap the circumferential portion of the core portion of the electrode assembly, and for example, one tab is provided to wrap 50% or more of the surface facing the core portion in a continuous shape.

A case in which the tab is not provided continuously to wrap the circumferential portion of the core portion of the electrode assembly is, for example, a case in which the existing in-tab is provided diagonally and wound and provided on the circumferential portion of the core portion. When the existing in-tab 31' is wound and provided on the circumferential portion of the core portion, the rigidity may be reduced compared to the in-tab 31 of the present invention, and as wound in a spiral shape, burrs at corner portions of the tab may be located on an outer peripheral surface of the core portion, which may reduce safety, such as damage to the separator.

FIG. 3 is a view showing a process that in a secondary battery including the electrode assembly according to the Comparative Example of the present invention, stress is generated in the electrode assembly due to charging and discharging and suppressed from expanding outward by a battery can, causing deformation in the core portion.

In the secondary battery, the separator that is an insulator is interposed between the positive electrode and the negative electrode, which is then wound to form a jelly-roll type electrode assembly, and the electrode assembly is inserted into a battery can together with an electrolyte, whereby a battery is configured.

The secondary battery may be a cylindrical secondary battery.

When a jelly-roll type electrode assembly has a structure in which the electrode assembly is wound by using a core portion, expansion and contraction of the negative electrode occurs and stress is generated in the electrode assembly during charging and discharging of a secondary battery including the electrode assembly. The core portion of the electrode assembly is an empty space, and the stress generated during charging and discharging is suppressed from expanding outward by the battery can, and acts inside the electrode assembly, causing deformation in the core portion. If the deformation of the core portion becomes severe, stress such as bending a portion of the electrode may occur, and as a result, a short circuit due to damage to the separator may occur inside the electrode assembly.

An exemplary embodiment of the present invention provides an electrode assembly wherein the negative electrode includes a current collector and an electrode active material layer provided on the current collector, wherein the current collector includes an uncoated portion not provided with the electrode active material layer, wherein the negative electrode includes the uncoated portions at one or more of end portions in a direction perpendicular to a winding axis of electrode assembly, and wherein the in-tab is provided in the uncoated portion, provided at an end portion located in the core portion, of the uncoated portions.

Referring to FIG. 4, the negative electrode 30 has the in-tab 31 provided in an uncoated portion 37 provided at an end portion located in the core portion and thus has high electrical conductivity, so it is advantageous to be electrically connected, and the resistance of the electrode assembly is reduced, which is advantageous in terms of energy density.

According to an exemplary embodiment of the present invention, a negative electrode tab 33 may be provided at one or more of both end portions in a direction perpendicular to the winding axis of the electrode assembly.

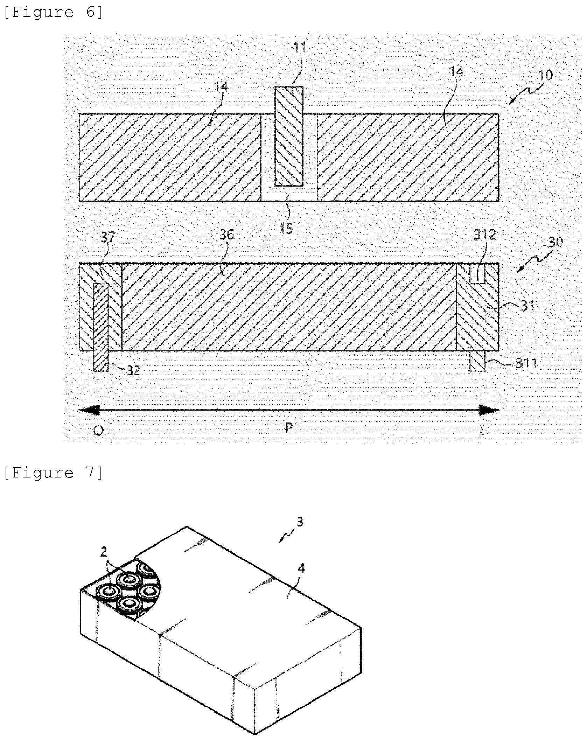

FIG. 6 is a view schematically showing a negative electrode and a positive electrode of an electrode assembly according to an exemplary embodiment of the present invention.

Referring to FIGS. 4 and 6, the negative electrode 30 according to an exemplary embodiment of the present invention may further include an outer tab 32 provided at an outer end portion of both end portions in a direction perpendicular to the winding axis of the electrode assembly. Since the negative electrode 30 further includes the one outer tab 32, the resistance of the electrode assembly can be reduced as the number of tabs increases.

Accordingly, a positive electrode 10, which will be described below, may have a free edge shape and a middle tab 11 structure in which end portions of a positive electrode current collector and end portions of a positive electrode active material layer 14 coincide with each other at end portions in a direction perpendicular to the winding axis of the electrode assembly.

Due to the positive electrode free edge structure, the negative electrode 30 expands and contracts during charging and discharging of the electrode assembly, and stress may increase in a portion where the free edge of the positive electrode 10 contacts. However, the in-tab 31 of the negative electrode 30 increases the internal rigidity of the core portion, preventing deformation of the core portion of the electrode assembly 1 and preventing a short circuit due to damage to the separator.

In addition, the outer tab 32 is further included, so that the resistance of the electrode assembly 1 can be reduced, and the energy density can be increased.

As an example different from the exemplary embodiment of the present invention, a structure in which the positive electrode tab is located in the core portion is possible. The electrode assembly according to the above structure generally has a structure in which one positive electrode in-tab and one negative electrode outer tab are applied, and has the smaller number of tabs than the structure of the electrode assembly according to the present invention, resulting in a problem that the resistance of the electrode assembly increases.

Part (a) of FIG. 2 is a view schematically showing a cross section perpendicular to a winding axis of an existing electrode assembly 1' according to the Comparative Example of the present invention, and part (b) of FIG. 2 is a view schematically showing a cross section perpendicular to a winding axis of an electrode assembly 1 according to an exemplary embodiment of the present invention. In this case, the positive electrode has a free edge structure, so when the electrode assembly is charged and discharged, the negative electrode expands and contracts, and stress may increase in a portion where the positive electrode free edge contacts.

Referring to part (a) of FIG. 2, a width of the existing in-tab 31' according to Comparative Example of the present invention is relatively thin compared to the in-tab 31 according to the exemplary embodiment of the present invention, so the existing in-tab cannot be provided to wrap 50% or more of the surface of the negative electrode facing the core portion, and cannot thus prevent expansion stress inside the electrode assembly from acting on the core portion.

The existing in-tab 31' has a relatively thin width compared to the in-tab 31 according to the exemplary embodiment of the present invention, so not only even if it is provided in the direction of the winding axis of the electrode assembly, but also even if it is provided diagonally and wound to form a spiral shape, a discontinuous section occurs in the form, resulting in a reduction in internal rigidity compared to the continuous in-tab 31 according to the present invention, so that the expansion stress inside the existing electrode assembly 1' cannot be prevented from acting on the core portion. In addition, due to the spiral shape, burrs may be present in the discontinuous section of the in-tab, and in this case, the separator may be damaged, making safety vulnerable.

On the other hand, referring to part (b) of FIG. 2, the in-tab 31 according to an exemplary embodiment of the present invention is one continuous tab and is provided to wrap 50% or more of the surface of the negative electrode facing the core portion, resulting in an increase in the internal rigidity of the core portion whereby it is possible to prevent the expansion stress inside the electrode assembly 1 from acting on the core portion. Accordingly, it is advantageous to ensure battery stability by preventing deformation of the core portion of the electrode assembly 1 and preventing a short circuit due to damage to the separator. In addition, compared to the spiral-shaped tab, the in-tab 31 is provided continuously, so there is no burr and thus no risk of damage to the separator.

An exemplary embodiment of the present invention provides the electrode assembly 1 in which the in-tab 31 is provided to wrap 70% or more of the surface 40 facing the core portion. Specifically, the in-tab 31 may be provided to wrap 75% or more, 80% or more, 85% or more, 90% or more, or 95% or more of the surface 40 facing the core portion. The in-tab 31 may be provided to wrap 100% or less, or 100% of the surface 40 facing the core portion.

Within the above range, the in-tab 31 can maintain rigidity and prevent the expansion stress inside the electrode assembly 1 from acting on the core portion. Accordingly, it is possible to prevent deformation of the core portion of the electrode assembly 1 and prevent a short circuit due to damage to the separator, thereby ensuring battery stability.

In an exemplary embodiment of the present invention, a width of the in-tab is 80% or greater and 100% or less of a length of a circumferential portion of the core portion.

Referring to FIGS. 4 and 5, a width 31W of the in-tab refers to a length of the in-tab in a direction perpendicular to the winding axis of the electrode assembly.

A circumferential portion 41R of the core portion refers to a circumference of the core portion that is an empty space provided by winding a jelly-roll type electrode assembly.

The width 31W of the in-tab may be 85% or more, 90% or more, or 95% or more of the length of the circumferential portion 41R of the core portion. The width of the in-tab may be 100% or less, or 100%, of the length of the circumferential portion of the core portion.

When the width 31W of the in-tab satisfies the above range, the in-tab 31 is provided in the negative electrode to wrap the circumferential portion 41R of the core portion, so that the internal rigidity of the core portion can be increased and thus expansion stress inside the electrode assembly can be prevented from acting on the core portion. Therefore, it is advantageous to ensure battery stability by preventing deformation of the core portion of the electrode assembly and preventing a short circuit due to damage to the separator.

In an exemplary embodiment of the present invention, the width of the in-tab is 15% to 20% of a length of a circumferential portion of the electrode assembly.

The circumferential portion 51R of the electrode assembly refers to a circumferential portion of an end portion in the winding axis direction of the electrode assembly 1.

The width 31W of the in-tab may be 15.5% or more, or 16% or more of the length of the circumferential portion 51R of the electrode assembly. The width 31W of the in-tab may be 19.5% or less, 19% or less, 18.5% or less, or 18% or less of the length of the circumferential portion 51R of the electrode assembly.

When the above range is satisfied, the in-tab 31 is provided to wrap the circumferential portion 41R of the core portion of the negative electrode, so that the internal rigidity of the core portion can be increased and thus expansion stress inside the electrode assembly 1 can be prevented from acting on the core portion.

In an exemplary embodiment of the present invention, the in-tab 31 has a length ranging from 10 mm to 12 mm extending in a direction perpendicular to the winding axis of the electrode assembly.

The length extending from the in-tab in a direction perpendicular to the winding axis of the electrode assembly may be the width 31W of the in-tab.

The in-tab 31 may have a length of 10.3 mm or longer, 10.6 mm or longer, or 10.9 mm or longer extending in the direction perpendicular to the winding axis of the electrode assembly. The in-tab 31 may have a length of 11.7 mm or less, 11.4 mm or less, or 11.1 mm or less extending in the direction perpendicular to the winding axis of the electrode assembly.

When the above range is satisfied, the in-tab 31 is provided to wrap the circumferential portion 41R of the core portion of the negative electrode, so that the internal rigidity of the core portion can be increased and thus expansion stress inside the electrode assembly 1 can be prevented from acting on the core portion. Therefore, it is advantageous to ensure battery stability by preventing deformation of the core portion of the electrode assembly 1 and preventing a short circuit due to damage to the separator.

In an exemplary embodiment of the present invention, a thickness of the in-tab is 100 um or greater.

Referring to FIG. 2, a thickness 31T of the in-tab may be 110 um or greater, 120 um or greater, 130 um or greater, or 140 um or greater. The thickness of the in-tab may be 200 um or less, 190 um or less, 180 um or less, or 170 um or less.

When the above range is satisfied, the in-tab 31 can increase the internal rigidity of the core portion, thereby preventing expansion stress inside the electrode assembly 1 from acting on the core portion. Therefore, it is advantageous to ensure battery stability by preventing deformation of the core portion of the electrode assembly 1 and preventing a short circuit due to damage to the separator. In addition, since the in-tab 31 has appropriate rigidity within the above thickness range, it is easy to wind the electrode assembly during a winding process.

An exemplary embodiment of the present invention provides an electrode assembly in which the in-tab has a thermal conductivity of 90 W/(m·K) or greater.

The thermal conductivity is a difference in the degree to which heat is transferred from one side to the other and refers to an inherent property of a material that exhibits heat transfer. The thermal conductivity (k) may be measured under conditions of 1 atm and 293K (=20°C) by Equation (1) below.

$$P = k \times A(\triangle T/L) \; - \; \text{Equation (1)}$$

P = heat flow (W)
A = area ($m^2$) of sample
L = sample thickness (m)
$\triangle T$ = temperature difference (K, or °C)

The in-tab may have a thermal conductivity of 91 W/(m·K) or greater, 100 W/(m·K) or greater, 200 W/(m·K) or greater, 300 W/(m-K) or greater, or 400 W/(m-K) or greater. The in-tab may have a thermal conductivity of 450 W/(m·K) or less, 430 W/(m·K) or less, 410 W/(m·K) or less, or 405 W/(m·K) or less.

The in-tab may include at least one of copper and nickel, as described below. In this case, a thermal conductivity of copper may be 401 W/(m·K), and a thermal conductivity of Ni may be 91 W/(m·K).

The in-tab may be provided as a clad tab in which a copper layer containing the copper and a nickel layer containing the nickel are bonded. In this case, heat generated in the electrode assembly may be transmitted through the copper layer with good thermal conductivity, so that the in-tab may have a thermal conductivity similar to that of copper, making it advantageous for heat conduction.

Referring to parts (a) and (b) of FIG. 1, the existing in-tab 31' according to the Comparative Example of the present invention has a relatively narrow width compared to the in-tab 31 according to an exemplary embodiment of the present invention, so not only even if it is provided in the direction of the winding axis of the electrode assembly 1, but also even if it is provided diagonally and wound to form a spiral shape, the thermal conductivity may be lower than that of the in-tab 31 according to the exemplary embodiment of the present invention. Specifically, the existing in-tab 31' has a relatively narrow width or has a discontinuous section in the spiral shape, so that heat is transferred only in a narrow or spiral direction compared to the continuous in-tab 31 according to the present invention. On the other hand, the in-tab 31 according to the exemplary embodiment of the present invention is advantageous for heat conduction because heat can be transferred in any direction in 2D.

In an exemplary embodiment of the present invention, the in-tab includes at least one of copper and nickel.

The in-tab may include copper. The in-tab may include 50% to 100% of copper compared to a total 100%.

The in-tab may include nickel. The in-tab may include 0% to 50% of nickel compared to a total 100%.

The in-tab may be provided as a clad tab in which a copper layer including copper and a nickel layer including nickel are bonded.

The in-tab includes the compound, making it more advantageous for heat conduction in an electrode assembly including the in-tab.

An exemplary embodiment of the present invention provides an electrode assembly in which the in-tab includes a protrusion on one surface of an end portion in the winding axis direction of the electrode assembly.

Referring to FIGS. 4 and 5, the protrusion 311 is a configuration necessary for welding with a battery can in a secondary battery including the electrode assembly 1. The protrusion 311 is bent and positioned to a central portion of the core portion, and welded to a central portion of an inner bottom surface of the battery can, so that the in-tab 31 and the battery can may be electrically connected.

The central portion of the core portion refers to a central region of a cross section of the core portion perpendicular to the winding axis of the electrode assembly 1, and the central portion of the inner bottom surface of the battery can refers to a central region of a cross section of the inner bottom surface of the battery can perpendicular to the winding axis of the electrode assembly.

In an exemplary embodiment of the present invention, the in-tab includes a recessed portion on the other surface opposite to one surface of the end portion in the winding axis direction of the electrode assembly.

The recessed portion 312 is a configuration provided for convenience during an assembly process. Generally, when attaching the in-tab 31 to the electrode assembly 1, the in-tab 31 of a certain length is cut from a wound tab roll and attached. When the protrusion 311 is present according to an exemplary embodiment of the present invention, the recessed portion 312 may be inevitably generated when the tab of a certain length is cut.

In an exemplary embodiment of the present invention, the positive electrode includes a current collector and an electrode active material layer provided on the current collector, and an end portion of the positive electrode current collector and an end portion of the positive electrode active material layer coincide with each other at least at one or both end portions in a direction perpendicular to the winding axis of the electrode assembly.

Referring to FIG. 6, the configuration that an end portion of the positive electrode current collector and an end portion of the positive electrode active material layer 14 coincide with each other at an end portion of the positive electrode 10 may mean that the positive electrode 10 in the electrode assembly 1 has a free edge and an uncoated portion 15 is not formed at both end portions of the positive electrode 10 in a direction P perpendicular to the winding axis of the electrode assembly 1.

The configuration that the end portion of the positive electrode current collector and the end portion of the positive electrode active material layer 14 coincide with each other at the end portion of the positive electrode 10 means that lengths of the positive electrode current collector and the positive electrode active material layer 14 at the end portion of the positive electrode are the same. In this case, the length of the positive electrode current collector and the length of the positive electrode active material layer 14 may be within a general error range in the art. For example, the length of the positive electrode current collector relative to the length of the positive electrode active material layer 14 at the end portion of the positive electrode may be +0.5% or less.

According to an exemplary embodiment, the end portion of the positive electrode may be provided at a winding start portion of the wound electrode assembly.

In an exemplary embodiment of the present invention, the positive electrode further includes a tab provided at a portion other than both end portions in the direction perpendicular to the winding axis of the electrode assembly.

As described above, the positive electrode has a free edge structure, and therefore, an uncoated portion 15 may not be formed at both end portions of the positive electrode in the direction P perpendicular to the winding axis of the electrode assembly.

Accordingly, the positive electrode may have a middle-tab structure, and the middle-tab structure means that a tab 11 provided at a portion other than both end portions in the direction P perpendicular to the winding axis of the electrode assembly 1 is further included. Therefore, both end portions in the direction P perpendicular to the winding axis of the electrode assembly 1 may have free edges at which the uncoated portion 15 is not formed. The middle tab 11 may be provided on the positive electrode uncoated portion 15.

Referring to FIG. 6, the positive electrode 10 may have a free edge shape and a middle tab 11 structure in which end portions of the positive electrode current collector and end portions of the positive electrode active material layer 14 coincide with each other at end portions in the direction perpendicular to the winding axis of the electrode assembly 1.

Due to the positive electrode free edge structure, the negative electrode expands and contracts during charging and discharging of the electrode assembly 1, and stress may increase in a portion where the free edge of the positive electrode 10 contacts. However, the in-tab 31 of the negative electrode 30 increases the internal rigidity of the core portion, preventing deformation of the core portion of the electrode assembly 1 and preventing a short circuit due to damage to the separator. In addition, the negative electrode 30 further includes an outer tab 32, so that the resistance of the electrode assembly can be reduced, and the energy density can be increased compared to a case where the positive electrode 10 and the negative electrode 30 each have one tab.

An exemplary embodiment of the present invention provides a secondary battery including the electrode assembly according to the exemplary embodiment described above.

In the present invention, a positive electrode active material coated on a positive electrode plate and a negative electrode active material coated on a negative electrode plate can be used without limitation as long as they are active materials known in the art.

Non-limiting examples of the positive electrode active material may include usual positive electrode active materials that can be used for a positive electrode of a conventional electrochemical device, and in particular, a lithium manganese oxide, a lithium cobalt oxide, a lithium nickel oxide, a lithium iron oxide, or a lithium composite oxide made by combining them may be used.

In one example, the positive electrode active material may include an alkali metal compound represented by a general formula $A[A_xM_y]O_{2+z}$ (A includes at least one element of Li, Na and K; M includes at least one element selected from Ni, Co, Mn, Ca, Mg, Al, Ti, Si, Fe, Mo, V, Zr, Zn, Cu, Mo, Sc, Zr, Ru, and Cr; $x \geq 0$, $1 \leq x+y \leq 2$, $-0.1 \leq z \leq 2$; x, y, z, and stoichiometric coefficients of components included in M are selected such that a compound remains electrically neutral).

In another example, the positive electrode active material may be an alkali metal compound $xLiM^1O_2$-$(1-x)Li_2M^2O_3$ ($M^1$ includes at least one element having an average oxidation state of 3; $M^2$ includes at least one element having an average oxidation state of 4; $0 \leq x \leq 1$) disclosed in US6,677,082, US6,680,143, and the like.

In another example, the positive electrode active material may be a lithium metal phosphate represented by a general formula $Li_aM^1_xFe_{1-x}M^2_yP_{1-y}M^3_zO_{4-z}$ ($M^1$ includes at least one element selected from Ti, Si, Mn, Co, Fe, V, Cr, Mo, Ni, Nd, Mg, and Al; $M^2$ includes at least one element selected from Ti, Si, Mn, Co, Fe, V, Cr, Mo, Ni, Nd, Al, Mg, As, Sb, Si, Ge, V and S; $M^3$ includes an element in a halogen group optionally including F; $0<a \leq 2$, $0 \leq x \leq 1$, $0 \leq y<1$, $0 \leq z<1$; a, x, y, z, and stoichiometric coefficients of components included in $M^1$, $M^2$, and $M^3$ are selected such that the compound remains electrically neutral) or $Li_3M_2(PO_4)_3$ [M includes at least one element selected from Ti, Si, Mn, Fe, Co, V, Cr, Mo, Ni, Mg, and Al].

Preferably, the positive electrode active material may include a primary particle and/or a secondary particle in which the primary particles are aggregated.

Non-limiting examples of the negative electrode active material may include usual negative electrode active materials that can be used for a negative electrode of a conventional electrochemical device, and particularly, lithium adsorption materials such as a lithium metal or lithium alloy, carbon, petroleum coke, activated carbon, graphite or other carbonaceous materials may be used.

In one example, the negative electrode active material may use a carbon material, a lithium metal or lithium metal compound, silicon or a silicon compound, tin or a tin compound, or the like. A metal oxide such as $TiO_2$ and $SnO_2$ with a potential less than 2V may also be used as a negative electrode active material. As the carbon material, both low-crystalline carbon and high-crystalline carbon may be used.

Non-limiting examples of the positive electrode current collector include a foil made of aluminum, nickel, or a combination thereof, or the like, and non-limiting examples of the negative electrode current collector include a foil made of copper, gold, nickel, or a copper alloy or a combination thereof, or the like.

For the separator, a porous polymer film, for example, a porous polymer film made of a polyolefin-based polymer such as an ethylene homopolymer, a propylene homopolymer, an ethylene/butene copolymer, an ethylene/hexene copolymer or an ethylene/methacrylate copolymer may be used alone, or a structure obtained by laminating the polymers may be used. In another example, for the separator, a typical porous non-woven fabric, for example, a non-woven fabric formed of high melting point glass fibers, polyethylene terephthalate fibers, or the like may be used.

At least one surface of the separator may include a coating layer of inorganic particles.

In addition, it is also possible that the separator itself is made of a coating layer of inorganic particles. Particles constituting the coating layer may have a structure combined with a binder so that an interstitial volume exists between adjacent particles.

The inorganic particles may be made of an inorganic material having a dielectric constant of 5 or greater. Non-limiting examples of the inorganic particles may include at least one material selected from the group consisting of Pb $(Zr,Ti)O_3$(PZT), $Pb_{1-x}La_xZr_{1-y}Ti_yO_3$ (PLZT), $PB(Mg_3Nb_{2/3})O_3$-$PbTiO_3$(PMN-PT), $BaTiO_3$, hafnia $(HfO_2)$, $SrTiO_3$, $TiO_2$, $Al_2O_3$, $ZrO_2$, $SnO_2$, $CeO_2$, MgO, CaO, ZnO and $Y_2O_3$.

The electrolyte may be a salt having a structure such as $A^+B^-$. Here, $A^+$ includes ions composed of alkali metal cations such as $Li^+$, $Na^+$ and $K^+$ or combinations thereof. $B^-$ includes any one or more anions selected from the group consisting of $F^-$, $Cl^-$, $Br^-$, $I^-$, $NO_3^-$, $N(CN)_2^-$, $BF_4^-$, $ClO_4^-$, $AlO_4^-$, $AlCl_4^-$, $PF_6^-$, $SbF_6^-$, $AsF_6^-$, $BF_2C_2O_4^-$, $BC_4O_8^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $C_4F_9SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$.

The electrolyte can also be used by dissolving it in an organic solvent. As the organic solvent, propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), gamma $(\gamma)$ butyrolactone, or mixtures thereof may be used.

Still another exemplary embodiment of the present invention provides a battery pack including the at least one secondary battery according to the exemplary embodiment described above.

The cylindrical secondary battery according to the exemplary embodiment described above may be used to manufacture a battery pack.

FIG. 7 is a view showing a schematic configuration of a battery pack 3 including the secondary batteries 2 according to an exemplary embodiment of the present invention.

Referring to FIG. 7, the battery pack 3 according to an exemplary embodiment of the present invention includes an assembly in which the cylindrical secondary batteries are electrically connected, and a pack housing 4 for accommodating the assembly. The cylindrical secondary battery is the secondary battery 2 according to the exemplary embodiment described above. In the drawing, for convenience of illustration, components such as a bus bar for electrical connection of the cylindrical secondary batteries, a cooling unit and an external terminal are omitted.

Still another exemplary embodiment of the present invention provides a vehicle including the at least one battery pack described above.

The battery pack may be mounted on a vehicle. The vehicle may be, for example, an electric vehicle, a hybrid vehicle, or a plug-in hybrid vehicle. The vehicle includes a four-wheeled vehicle or a two-wheeled vehicle.

FIG. 8 is a view for illustrating the vehicle 5 including the battery pack 3 in FIG. 7.

Referring to FIG. 8, the vehicle 5 according to an exemplary embodiment of the present invention includes the battery pack 3 according to an exemplary embodiment of the present invention. The vehicle operates by receiving power from the battery pack 3 according to an exemplary embodiment of the present invention.

Although the present invention has been described with reference to the limited embodiments and drawings, the present invention is not limited thereto, and a variety of modifications and variations can be made within the technical spirit of the present invention and the equivalent range of the claims described below by one skilled in the art to which the present invention belongs.

**Claims**

1. An electrode assembly having a structure in which a positive electrode, a separator, and a negative electrode are stacked and wound,

   wherein the negative electrode comprises an in-tab provided at an end portion, located in a core portion of the electrode assembly, of both end portions of the negative electrode in a direction perpendicular to a winding axis of the electrode assembly, and
   wherein the in-tab is provided to wrap 50% or more of a surface of the negative electrode facing the core portion.

2. The electrode assembly of claim 1, wherein the negative electrode comprises a current collector and an electrode active material layer provided on the current collector,

   wherein the current collector comprises an uncoated portion where the electrode active material layer is not provided, and
   wherein the in-tab is provided in the uncoated portion provided at the end portion, located in the core portion of the electrode assembly, of both end portions of the negative electrode, in the direction perpendicular to the winding axis of the electrode assembly.

3. The electrode assembly of claim 1, wherein the in-tab is provided to wrap 70% or more of the surface of the negative electrode facing the core portion.

4. The electrode assembly of claim 1, wherein a width of the in-tab ranges from 80% to 100% of a length of a circumferential portion of the core portion.

5. The electrode assembly of claim 1, wherein a width of the in-tab ranges from 15% to 20% of a length of a circumferential portion of the electrode assembly.

6. The electrode assembly of claim 1, wherein the in-tab has a length ranging from 10 mm to 12 mm extending in the direction perpendicular to the winding axis of the electrode assembly.

7. The electrode assembly of claim 1, wherein a thickness of the in-tab is 100 um or greater.

8. The electrode assembly of claim 1, wherein the in-tab has a thermal conductivity of 90 W/(m·K) or greater.

9. The electrode assembly of claim 1, wherein the in-tab comprises at least one of copper or nickel.

10. The electrode assembly of claim 1, wherein the in-tab comprises a protrusion on one surface of an end portion in the winding axis direction of the electrode assembly.

11. The electrode assembly of claim 1, wherein the in-tab comprises a recessed portion on the other surface opposite to one surface of an end portion in the winding axis direction of the electrode assembly.

12. The electrode assembly of claim 1, wherein the positive electrode comprises a current collector and an electrode active material layer provided on the current collector, and

    wherein the positive electrode has such a configuration that an end portion of the positive electrode current collector and an end portion of the positive electrode active material layer coincide with each other at least at one of both end portions of the positive electrode in the direction perpendicular to the winding axis of the electrode assembly.

13. The electrode assembly of claim 1, wherein the positive electrode further comprises a tab provided at a portion other than the both end portions in the direction perpendicular to the winding axis of the electrode assembly.

14. A secondary battery comprising the electrode assembly of any one of claims 1 to 13.

15. A battery pack comprising the secondary battery of claim 14.

16. A vehicle comprising at least one battery pack of claim 15.

[Figure 1]

[Figure 2]

(a)

(b)

[Figure 3]

[Figure 4]

[Figure 5]

[Figure 6]

[Figure 7]

EP 4 459 736 A1

[Figure 8]

[Figure 9]

[Figure 10]

## INTERNATIONAL SEARCH REPORT

| International application No. |
| --- |
| **PCT/KR2023/015993** |

### A. CLASSIFICATION OF SUBJECT MATTER

**H01M 10/0587**(2010.01)i; **H01M 50/531**(2021.01)i; **H01M 50/533**(2021.01)i; **H01M 10/04**(2006.01)i

According to International Patent Classification (IPC) or to both national classification and IPC

### B. FIELDS SEARCHED

Minimum documentation searched (classification system followed by classification symbols)

H01M 10/0587(2010.01); H01M 10/04(2006.01); H01M 10/28(2006.01); H01M 10/30(2006.01); H01M 50/531(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 양극(anode), 음극(cathode), 분리막(separator), 전극 조립체(electrode assembly), 인탭(intap), 권심부(core part)

### C. DOCUMENTS CONSIDERED TO BE RELEVANT

| Category* | Citation of document, with indication, where appropriate, of the relevant passages | Relevant to claim No. |
| --- | --- | --- |
| Y | KR 10-2016-0085063 A (SAMSUNG SDI CO., LTD.) 15 July 2016 (2016-07-15)<br>See paragraphs [0009]-[0028], claim 1 and figure 3. | 1-16 |
| Y | KR 10-2021-0046337 A (LG CHEM, LTD.) 28 April 2021 (2021-04-28)<br>See paragraphs [0051]-[0081] and figures 3-4. | 1-16 |
| Y | KR 10-2022-0074498 A (LG ENERGY SOLUTION, LTD.) 03 June 2022 (2022-06-03)<br>See paragraphs [0038]-[0045] and figure 3. | 12-13 |
| A | KR 10-0731453 B1 (SAMSUNG SDI CO., LTD.) 21 June 2007 (2007-06-21)<br>See claim 1 and figures 1-3. | 1-16 |
| A | JP 2005-056678 A (SANYO ELECTRIC CO., LTD.) 03 March 2005 (2005-03-03)<br>See paragraphs [0034]-[0040] and figures 6-7. | 1-16 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **02 February 2024** | **02 February 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/015993**

| Patent document cited in search report | | | Publication date (day/month/year) | Patent family member(s) | | | Publication date (day/month/year) |
|---|---|---|---|---|---|---|---|
| KR | 10-2016-0085063 | A | 15 July 2016 | US | 2016-0197379 | A1 | 07 July 2016 |
| KR | 10-2021-0046337 | A | 28 April 2021 | CN | 114766069 | A | 19 July 2022 |
| | | | | EP | 4007024 | A1 | 01 June 2022 |
| | | | | JP | 2022-552587 | A | 19 December 2022 |
| | | | | JP | 7387966 | B2 | 29 November 2023 |
| | | | | US | 2022-0328859 | A1 | 13 October 2022 |
| | | | | WO | 2021-075710 | A1 | 22 April 2021 |
| KR | 10-2022-0074498 | A | 03 June 2022 | None | | | |
| KR | 10-0731453 | B1 | 21 June 2007 | US | 2007-0154797 | A1 | 05 July 2007 |
| | | | | US | 7993770 | B2 | 09 August 2011 |
| JP | 2005-056678 | A | 03 March 2005 | CN | 100341194 | C | 03 October 2007 |
| | | | | CN | 1581557 | A | 16 February 2005 |
| | | | | JP | 4439220 | B2 | 24 March 2010 |
| | | | | US | 2005-0031950 | A1 | 10 February 2005 |
| | | | | US | 8309243 | B2 | 13 November 2012 |

Form PCT/ISA/210 (patent family annex) (July 2022)

**REFERENCES CITED IN THE DESCRIPTION**

**Patent documents cited in the description**

- KR 1020220133219
- KR 1020230137388
- US 6677082 B
- US 6680143 B